# EUROPÄISCHE PATENTANMELDUNG

(11) **EP 4 346 060 A1**
(43) Veröffentlichungstag der Anmeldung: **03.04.2024**
(21) Anmeldenummer: 23199682.8
(22) Anmeldetag: 26.09.2023
(51) Int. Cl.: H02J 7/00, B60L 53/60, B60L 53/66

(54) **VERFAHREN UND LADEVORRICHTUNG ZUM MANIPULATIONSGESCHÜTZTEN VERARBEITEN UND/ODER AUSGEBEN VON MESSDATEN DER LADEVORRICHTUNG**

(30) Priorität: 29.09.2022 BE 202205776
(71) Anmelder: Phoenix Contact e-Mobility GmbH, 32816 Schieder-Schwalenberg (DE)
(72) Erfinder: ROSE, Markus, 33102 Paderborn (DE); Wiesenthal, Thomas, 59759 Arnsberg (DE)
(74) Vertreter: Meyer-Graefe, Karsten

(57) **Zusammenfassung**

Die Erfindung betrifft ein Verfahren zum manipulationsgeschützten Verarbeiten und/oder Ausgeben von Messdaten einer Ladevorrichtung (1) zur Übertragung elektrischer Energie an einen Verbraucher in einem Ladebetriebszustand, wobei eine Messeinrichtung (40) der Ladevorrichtung (1) zur Erfassung übertragener elektrischer Energie der Ladevorrichtung (1) und zur Generierung zumindest eines Messsignals (S) in Abhängigkeit der übertragenen elektrischen Energie konfiguriert ist, und wobei eine Recheneinrichtung (50) der Ladevorrichtung (1) zur Steuerung und/oder Regelung der Messeinrichtung (40) und einer Versorgungseinrichtung (30) der Ladevorrichtung (1) zur Bereitstellung elektrischer Energie an den Verbraucher mittels jeweils zumindest eines Betriebssignals (S) konfiguriert ist, wobei das Verfahren umfasst: Aufbauen einer Kommunikationsverbindung der Recheneinrichtung (50) mit der Versorgungseinrichtung (30) und/oder der Messeinrichtung (40); Prüfen einer Authentizität der Versorgungseinrichtung (30) und/oder der Messeinrichtung (40) durch die Recheneinrichtung (50); Generieren zumindest eines Authentizitätssignals (S) bei ermittelter mangelnder Authentizität der Versorgungseinrichtung (30) und/oder der Messeinrichtung (40) durch die Recheneinrichtung (50); Aktivieren zumindest eines Kontrollbetriebszustands der Recheneinrichtung (50) in Abhängigkeit des zumindest einen Authentizitätssignals (S). Ferner betrifft die Erfindung eine Ladevorrichtung (1) zur Übertragung elektrischer Energie an einen Verbraucher in einem Ladebetriebszustand.

## Beschreibung

Die vorliegende Erfindung liegt auf dem Gebiet der elektrischen Messtechnik mit elektronischer Signalverarbeitung, vorzugsweise im Bereich der Elektromobilität, und betrifft ein Verfahren und eine Ladevorrichtung zum manipulationsgeschützten Verarbeiten und/oder Ausgeben von Messdaten der Ladevorrichtung.

Elektrisch antreibbare Fahrzeuge (Elektrofahrzeuge) können beispielsweise an öffentlichen Ladestationen mittels entsprechender Ladevorrichtungen geladen werden. Elektrofahrzeuge verfügen hierzu in der Regel über entsprechende Akkumulatoren, um die von der Ladevorrichtung übertragene elektrische Energie zu speichern. Um die übertragene elektrische Energie, das heißt Energiemenge authentisch und ordnungsgemäß zu erfassen und dem Benutzer der Ladevorrichtung vor allem manipulationsgeschützt in Rechnung zu stellen, sind verschiedene technische und rechtliche Vorschriften sowie Zertifizierungen zu erfüllen. Beispielsweise gibt insbesondere das sogenannte Eichrecht (beispielsweise das in Deutschland geltende Mess- und Eichgesetz/MessEG) vor, dass gemessene Strommengen pro Ladevorgang eines Elektrofahrzeugs, beispielsweise in Kilowattstunden (abgekürzt "kWh"), integer, authentisch und vollständig sein müssen. Damit einhergehend haben beispielsweise elektrische Messgeräte oder Messeinrichtungen bestimmte Anforderungen zu erfüllen. Ein Beispiel hierfür ist die so genannte "MID-Konformität" bei Messeinrichtungen.

Ziel ist die Bereitstellung eines vollständig transparenten und wahrheitsgemäßen Informationsstands über den Ladevorgang. Beispielsweise umfasst ein solcher Informationsstand den Zeitraum des Ladevorgangs mit Startzeitpunkt und Endzeitpunkt, sowie insbesondere die konkret übertragene elektrische Energiemenge. Mittlerweile müssen in Deutschland beispielsweise sämtliche gewerblich und/oder öffentlich betriebene Ladestationen dem Eichrecht entsprechen (siehe hierzu beispielsweise die EU-Richtlinie 2014/94/EU). Kosten, welche an gewerblich und/oder öffentlich genutzten Ladestationen für übertragene Energiemengen erhoben werden, müssen angemessen, einfach und eindeutig, vergleichbar, transparent und nichtdiskriminierend sein.

Eine Anforderung, die es im Zuge der Abrechnung übertragener Energiemengen zu erfüllen gilt, ist beispielsweise die sichere Speicherung von Messdaten einer Ladesäule für einen bestimmten Zeitraum im Anschluss an den Ladevorgang über eine Widerspruchsfrist hinaus, beispielsweise 3 Jahre. Häufig werden hierzu auch Messdaten an ein zentrales Abrechnungssystem mit entsprechenden Speichereinrichtungen zur Speicherung übermittelt.

Die bekannten marktüblichen Lösungen, angefangen von der Ladestation insgesamt, über die Ladevorrichtung bis hin zu Anzeigeeinheiten von Messdaten, sind jedoch an unterschiedlichen Stellen, das heißt Komponenten und Elementen anfällig oder für Manipulation zugänglich. Neben mechanischen Schutzmechanismen, wie beispielsweise mehrfachen Verplombungen in Kombination mit mechanischen Abdeckungen (Hauben), kommen ferner auch softwarebasierte Schutzmechanismen zur Gewährleistung eines Manipulationsschutzes von Messdaten zum Einsatz. Beispielsweise kann zur nachträglichen Kontrolle und Plausibilisierung von Abrechnungsdaten eine so genannte Transparenzsoftware zum Einsatz kommen, welche dem Benutzer der Ladestation allerdings häufig nur über Umwege zur Verfügung steht und ferner in der Handhabung und Bedienung komplex ist. Mitunter werden eichrechtrelevante Daten und Informationen, sowie informative Dialoge zur Benutzerführung häufig auf unterschiedlichen Anzeigeeinheiten ("Displays") angezeigt und sind somit nicht besonders benutzerfreundlich.

Im Zuge von Abrechnungen von Ladevorgängen elektrisch antreibbarer Fahrzeuge (Elektrofahrzeuge) an beispielsweise öffentlichen Ladestationen mit entsprechenden Ladevorrichtungen zur Übertragung der elektrischen Energie müssen neu in den Markt eingeführte Ladesäulen die tatsächlich geladene Energiemenge auf einer Anzeigeeinheit manipulationsgeschützt anzeigen. Ferner müssen insbesondere sämtliche in der Ladesäule befindlichen Messeinrichtungen und Kommunikationsleitungen vor Manipulation geschützt werden.

Entsprechende Lösungen sind aus der Patentliteratur des Stands der Technik bekannt.

So betrifft die internationale Patentanmeldung Nr. WO 2019/233918 A1 ein Verfahren zum Durchführen eines Ladevorgangs zum Laden eines elektrischen Energiespeichers eines Fahrzeugs, wobei eine Nutzerkennung eines Nutzers des Fahrzeugs an eine Ladevorrichtung übertragen wird und ein Energiemesszähler die benötigte elektrische Energiemenge während des Ladevorgangs ermittelt. Um den Ladevorgang manipulationssicher zu gestalten, wird ein Nutzerdatensatz, welcher die Nutzerkennung umfasst, generiert, signiert und mittels des Energiemesszählers kryptographisch gespeichert, das heißt gesichert.

In der europäischen Patentanmeldung Nr. EP 3 521 102 A1 wird ein Verfahren zur Überprüfung eines von einem Energiezähler einer Ladestation bereitgestellten Zählerstandes beschrieben. Die Ladestation dient zum Laden eines elektrisch angetriebenen Kraftfahrzeugs. Ein Startzählerstand der Ladestation wird zu Beginn und ein Endzählerstand nach Abschluss eines Ladevorgangs des elektrisch angetriebenen Kraftfahrzeugs erfasst und ein Datenpaket mit einem Datenblock erstellt. Eine Überprüfungseinheit überprüft den Datenblock des Ladevorgangs und vergleicht diesen mit jeweiligen Zählerständen und einem weiteren, nachfolgenden Datenblock eines zeitlich nachfolgenden Ladevorgangs.

Die europäische Patentanmeldung Nr. EP 3 718 814 A1 betrifft ein Verfahren zur Sicherung von Messwerten einer Ladestation, wobei ein erster Datensatz von einem Ladestationscontroller empfangen wird, welcher Informationen zu einem Ladevorgang und einem ersten Messgerätezählerstand umfasst. Im Zuge des Ladevorgangs wird ein Datenpaket generiert, welches unter Verwendung eines speziellen Protokolls an eine Abrechnungszentrale übermittelt wird.

Zum weiteren bekannten Stand der Technik aus der Patentliteratur wird noch auf die internationale Patentanmeldung Nr. WO 2021/168495 A1 und die europäische Patentanmeldung Nr. EP 3 702 200 A2 verwiesen.

Es ist eine Aufgabe der vorliegenden Erfindung, ein verbessertes Verfahren und eine verbesserte Ladevorrichtung zum manipulationsgeschützten Verarbeiten und/oder Ausgeben von Messdaten der Ladevorrichtung bereitzustellen, bei welcher beispielsweise die Verwendung von Verplombungen zum Schutz vor Manipulation von abrechnungsrelevanten Informationen oder Daten entbehrlich ist. Vorzugsweise soll auch die gesamte Interaktion des Benutzers mit der Ladevorrichtung verbessert sein, um vor allem eine transparente, wahrheitsgemäße, vollständige und manipulationsgeschützte Abrechnung eines Ladevorgangs zu gewährleisten.

Die Aufgabe wird durch die Merkmale der Ansprüche 1 und 14 gelöst. Weitere Ausführungsbeispiele und Anwendungen der vorliegenden Erfindung ergeben sich aus den abhängigen Ansprüchen und werden in der folgenden Beschreibung unter teilweiser Bezugnahme auf die Figuren näher erläutert.

Die vorliegende Erfindung betrifft nach einem ersten allgemeinen Gesichtspunkt ein Verfahren zum manipulationsgeschützten Verarbeiten und/oder Ausgeben von Messdaten einer Ladevorrichtung zur Übertragung elektrischer Energie an einen Verbraucher in einem Ladebetriebszustand, vorzugsweise an ein Elektrofahrzeug, wobei eine Messeinrichtung der Ladevorrichtung zur Erfassung übertragener elektrischer Energie der Ladevorrichtung und zur Generierung zumindest eines Messsignals in Abhängigkeit der übertragenen elektrischen Energie konfiguriert ist, und wobei eine Recheneinrichtung der Ladevorrichtung zur Steuerung und/oder Regelung der Messeinrichtung und einer Versorgungseinrichtung der Ladevorrichtung zur Bereitstellung elektrischer Energie an den Verbraucher mittels jeweils zumindest eines Betriebssignals konfiguriert ist, wobei das Verfahren umfasst:
Aufbauen einer Kommunikationsverbindung der Recheneinrichtung mit der Versorgungseinrichtung und/oder der Messeinrichtung; Prüfen einer Authentizität der Versorgungseinrichtung und/oder der Messeinrichtung durch die Recheneinrichtung; Generieren zumindest eines Authentizitätssignals bei ermittelter mangelnder Authentizität der Versorgungseinrichtung und/oder der Messeinrichtung durch die Recheneinrichtung; Aktivieren zumindest eines Kontrollbetriebszustands der Recheneinrichtung in Abhängigkeit des zumindest einen Authentizitätssignals.

Der Ladebetriebszustand stellt vorzugsweise denjenigen Zustand der Ladevorrichtung dar, welcher die Übertragung elektrischer Energie an den Verbraucher, das heißt vorzugsweise an das Elektrofahrzeug, umfasst, wobei sich die Ladevorrichtung in einem ordnungsgemäßen und/oder bestimmungsgemäßen Zustand befindet und ebenso in einem solchen Zustand betrieben wird, sodass vorzugsweise Anforderungen an die Funktionalität und/oder Sicherheit der Ladevorrichtung erfüllt werden. Nachfolgend wird anstelle des Begriffs "Verbraucher" teilweise der Begriff "Elektrofahrzeug" als Beispiel stellvertretend für einen Verbraucher verwendet. Ein Elektrofahrzeug ist vorzugsweise ein elektrisch antreibbares Fahrzeug, beispielsweise ein Personenkraftwagen oder ein Kraftrad, und umfasst vorzugsweise zumindest einen Akkumulator zur Speicherung übertragener elektrischer Energie.

Die Ladevorrichtung kann Bestandteil einer öffentlichen und/oder gewerblich genutzten Ladestation sein. Die Ladevorrichtung umfasst vorzugsweise eine Ladesäule mit einem Ladesäulengehäuse und einen Steckverbinder, welcher über ein Ladekabel mit der Ladesäule fest verbunden ist. Der Steckverbinder dient vorzugsweise zur Interaktion mit einem Benutzer der Ladevorrichtung und ist insbesondere zur Übertragung elektrischer Energie bei Ausbildung einer Steckverbindung mit einem Gegensteckverbinder des Elektrofahrzeugs konfiguriert. Der Steckverbinder ist vorzugsweise ein Ladestecker, und der Gegensteckverbinder ist vorzugsweise eine Ladesteckdose, welche an dem Elektrofahrzeug angeordnet ist. Die elektrische Energie wird vorzugsweise von einer Versorgungseinrichtung der Ladevorrichtung bereitgestellt. Die Versorgungseinrichtung kann mit einem öffentlichen elektrischen Energieversorgungsnetz verbunden sein und/oder zumindest ein Leistungselektronikmodul und/der zumindest ein Wandlungsmodul und/oder zumindest ein Netzteilmodul umfassen.

Vorzugsweise sind die Messeinrichtung zur Erfassung übertragener elektrischer Energie, die Versorgungseinrichtung zur Bereitstellung elektrischer Energie an den Verbraucher, vorzugsweise über das Ladekabel und den Ladestecker, sowie die Recheneinrichtung zur Steuerung und/oder Regelung der Messeinrichtung und der Versorgungseinrichtung in der Ladesäule und somit innerhalb des Gehäuses der Ladesäule angeordnet.

Die Messeinrichtung kann vorzugsweise als eine so genannte "MID konforme" Messeinrichtung ausgebildet sein und zur Erfassung übertragener elektrischer Energiemengen und darüber hinaus von Ladezeiten, von übertragenen Leistungen, von Datumsinformationen, und/oder von Uhrzeitangaben, konfiguriert sein. Die Abkürzung "MID" bedeutet im Kontext der Offenbarung der vorliegenden Erfindung vorzugsweise "Measuring Instruments Directive" und adressiert ein für den Rechtsraum der Europäischen Union geltendes Richtlinienwerk (beispielsweise die europäische Richtlinien Nr. 2004/22/EG, 2014/32/EU und 2015/13/EU).

Die Recheneinrichtung kann als so genannter Ladecontroller oder als so genannte Ladesteuerung, beispielsweise als DC-Ladesteuerung für Schnellladevorrichtungen, ausgebildet und/oder konfiguriert sein. Mit anderen Worten kann die Recheneinrichtung zumindest teilweise in Hardware und/oder zumindest teilweise in Software ausgebildet und/oder konfiguriert sein. Die Recheneinrichtung kann eine zentrale Prozessoreinheit mit zumindest einem Rechenkern zum Verarbeiten von Signalen und somit von Informationen umfassen, welches beispielsweise durch zumindest einen Softwarealgorithmus vorgegeben wird, welcher zum Zeitpunkt der Verarbeitung auf der zentralen Prozessoreinheit ausgeführt wird.

Aufbauen einer Kommunikationsverbindung der Recheneinrichtung mit der Versorgungseinrichtung und/oder mit der Messeinrichtung kann mittels einer manipulationsgeschützten Koppelungsprozedur drahtlos und/oder drahtgebunden geschehen. Das Prüfen der Authentizität der Versorgungseinrichtung und/oder der Messeinrichtung durch die Recheneinrichtung kann auf unterschiedliche Art und Weise erfolgen, was nachfolgend noch näher beschrieben wird. Ferner kann auch ein Aufbauen einer Kommunikationsverbindung der Recheneinrichtung mit einer Anzeigeeinrichtung erfolgen, vorzugsweise mittels einer manipulationsgeschützten Koppelungsprozedur.

Durch die vorliegende Erfindung ist es möglich, eine Authentizität zumindest der Versorgungseinrichtung und/oder der Messeinrichtung durch die Recheneinrichtung der Ladevorrichtung durchzuführen. Es wird in diesem Zusammenhang beispielsweise ermittelt, ob die Versorgungseinrichtung und/oder die Messeinrichtung hinsichtlich ihrer Funktionalität und/oder hinsichtlich ihres Verhaltens verändert sind gegenüber einer Referenzfunktionalität und/oder einem Referenzverhalten. Mit der vorliegenden Erfindung können Fehlfunktionen der Ladevorrichtung, insbesondere der Versorgungseinrichtung und/oder der Messeinrichtung, gefiltert oder ausgeblendet werden, da die Recheneinrichtung gezielt eine Überwachung und insbesondere Prüfung, vor allem vor, während und nach einem separaten Ladevorgang, der Authentizität der Versorgungseinrichtung und/oder der Messeinrichtung durchführt.

Mit Authentizität sind bestimmte Informationen verbunden, welche insbesondere die Versorgungseinrichtung und/oder die Messeinrichtung als solche in einem ordnungsgemäßen und unveränderten Zustand kennzeichnen.

Sollte eine mangelnde Authentizität ermittelt werden, so lässt sich hieraus mit hoher Wahrscheinlichkeit oder mit an Sicherheit grenzender Wahrscheinlichkeit das Vorliegen von Manipulation ableiten, was mit der Generierung von zumindest einem Authentizitätssignal verbunden ist. Das zumindest eine Authentizitätssignal repräsentiert und/oder umfasst vorzugsweise eine Information betreffend die Authentizität der jeweiligen Einrichtung.

Sobald nach erfolgter Prüfung bei mangelnder Authentizität zumindest ein Authentizitätssignal generiert ist, erfolgt vorzugsweise sodann ein Aktivieren zumindest eines Kontrollbetriebszustands der Recheneinrichtung in Abhängigkeit des zumindest einen Authentizitätssignals. Der zumindest eine Kontrollbetriebszustand stellt mit anderen Worten einen besonderen Modus im Sinne eines erweiterten Modus der Recheneinrichtung der erfindungsgemäßen Ladevorrichtung dar, welcher mit weiteren Phasen oder Abschnitten im Zuge der Ausführung des erfindungsgemäßen Verfahrens einhergehen kann, was nachfolgend näher beschrieben wird.

Somit stellt die vorliegende Erfindung ein Verfahren bereit, bei welchem beispielsweise bereits vor einem Ladevorgang eine Manipulation erkannt oder detektiert werden kann, um sodann in einen entsprechenden Betriebszustand der Recheneinrichtung und somit der Ladevorrichtung insgesamt zu wechseln. Mit anderen Worten kann bereits im Vorfeld ein Ladevorgang mit manipulierten Komponenten und/oder Elementen der Ladevorrichtung verhindert werden.

Es ist möglich, dass der zumindest eine Kontrollbetriebszustand umfasst: Generieren zumindest eines Verifikationssignals in Abhängigkeit des zumindest einen Authentizitätssignals und Übertragen des zumindest einen Verifikationssignals an einen Backend-Server durch die Recheneinrichtung; und/oder Deaktivieren des Ladebetriebszustands der Ladevorrichtung oder Deaktivieren des Initialisierens des Ladebetriebszustands der Ladevorrichtung; und/oder Aufzeichnen des zumindest einen Authentizitätssignals der Versorgungseinrichtung und/oder der Messeinrichtung durch die Recheneinrichtung.

Mit anderen Worten kann eine Verifikationsinformation generiert werden, welche beispielsweise weitere Informationen zu der betreffenden Einrichtung, bei welcher mangelnde Authentizität ermittelt oder festgestellt wurde, enthält. Durch Übertragen des zumindest einen Verifikationssignals an einen Backend-Server, vorzugsweise einen unabhängigen und/oder externen Backend-Server, wird beispielsweise gewährleistet, dass das zumindest eine Verifikationssignal von einer weiteren Instanz oder Einrichtung in Bezug auf den Umfang und/oder die Art der Manipulation ausgewertet werden kann.

Mit dem Deaktivieren des Ladebetriebszustands der Ladevorrichtung oder Deaktivieren des Initialisierens des Ladebetriebszustands der Ladevorrichtung kann bei ermittelter mangelnder Authentizität umgehend ein Ladevorgang abgebrochen oder beendet werden, sodass keine weitere Übertragung elektrischer Energie mit oder unter Einsatz zumindest einer manipulierten Komponente erfolgt.

Mit anderen Worten ist eine stetige und/oder ständige und somit fortwährende Überwachung insbesondere der Versorgungseinrichtung und/oder der Messeinrichtung der Ladevorrichtung, auch während des Ladevorgangs oder während des Initialisierens des Ladevorgangs, mit der vorliegenden Erfindung möglich. Selbstverständlich ermöglicht die vorliegende Erfindung auch ein Aufzeichnen und somit ein Protokollieren des zumindest einen Authentizitätssignals, welches somit für anschließende und/oder zeitlich spätere Auswertungen zur Verfügung steht.

Gemäß einem weiteren Gesichtspunkt der vorliegenden Erfindung umfasst Prüfen der Authentizität: Vergleichen einer Identifikationsinformation der Versorgungseinrichtung, und somit einer Hauptkomponente der Ladevorrichtung, und/oder der Messeinrichtung, und somit einer weiteren Hauptkomponente der Ladevorrichtung, mit jeweils einer in der Recheneinrichtung als Referenz gespeicherten Identifikationsinformation, vorzugsweise zumindest vor und/oder während des Ladebetriebszustands der Ladevorrichtung; wobei die Identifikationsinformation zumindest ein Identifikationskriterium von folgenden Identifikationskriterien umfasst: Zertifikat; Herstellername; Typ; Seriennummer; und Ermitteln der mangelnden Authentizität, wenn zumindest ein Identifikationskriterium der Identifikationsinformation der Versorgungseinrichtung und/oder der Messeinrichtung mit zumindest einem Identifikationskriterium der jeweils in der Recheneinrichtung als Referenz gespeicherten Identifikationsinformation nach Vergleich nicht übereinstimmt oder davon abweicht.

Prüfen der Authentizität kann ferner umfassen: Speichern der verglichenen Identifikationsinformation der Versorgungseinrichtung und/oder der Messeinrichtung in einer ersten Speichereinheit der Messeinrichtung mittels zumindest eines Betriebssignals der Recheneinrichtung, wobei vorzugsweise die erste Speichereinheit eine gesicherte Speichereinheit ist. Die Speichereinheit kann beispielsweise eine verschlüsselte Speichereinheit sein.

Prüfen der Authentizität kann ferner umfassen: Auslesen einer Identifikationsinformation der Versorgungseinrichtung und/oder der Messeinrichtung durch die Recheneinrichtung und Speichern der ausgelesenen Identifikationsinformation in einer Speichereinheit der Recheneinrichtung, vorzugsweise in Abhängigkeit von zumindest einem Kriterium, vorzugsweise eines Zertifikats.

Nach einem weiteren Gesichtspunkt der vorliegenden Erfindung kann vorgesehen sein, dass das Verfahren umfasst: Prüfen einer Plausibilität des zumindest einen Messsignals in Abhängigkeit einer Beurteilungsinformation durch die Recheneinrichtung, wobei die Beurteilungsinformation zumindest ein Beurteilungskriterium von folgenden Beurteilungskriterien umfasst: Messwertgröße, Zeitstempel, Signatur, gespeicherte Identifikationskriterien der Messeinrichtung; Generieren zumindest eines Prüfsignals bei ermittelter mangelnder Plausibilität des zumindest einen Messsignals; und Kennzeichnen des zumindest einen Messsignals mit zumindest einem Prüfsignal bei ermittelter mangelnder Plausibilität durch die Recheneinrichtung.

Damit wird beispielweise auch eine Auswertung und Beurteilung von Messdaten, welche durch die Messeinrichtung erfasst werden, im Hinblick auf Manipulation möglich. Mit anderen Worten kann auch aufgrund eines Verarbeitens und Auswertens von Messdaten das Vorliegen einer manipulierten Einrichtung oder Komponente, vorzugsweise der Messeinrichtung, ermittelt werden.

Gemäß einem weiteren Aspekt der vorliegenden Erfindung kann das Verfahren umfassen: Prüfen zumindest einer Signaturinformation und/oder zumindest einer Verschlüsselungsinformation durch die Recheneinrichtung; und Signieren des zumindest einen Messsignals durch die Messeinrichtung mit der geprüften zumindest einen Signaturinformation in Abhängigkeit zumindest eines Betriebssignals; und/oder Verschlüsseln des zumindest einen Messsignals durch die Messeinrichtung mit der geprüften zumindest einen Verschlüsselungsinformation in Abhängigkeit zumindest eines Betriebssignals, wobei die zumindest eine Signaturinformation einen öffentlichen Teil eines Signaturzertifikats und einen nicht-öffentlichen Teil eines Signaturzertifikats umfasst, und/oder wobei die zumindest eine Verschlüsselungsinformation einen nicht-öffentlichen Teil eines Verschlüsselungszertifikats umfasst. Vorzugsweise erfolgt ein Signieren des zumindest einen Messsignals durch die Messeinrichtung mittels des nicht-öffentlichen Teils der zumindest einen Signaturinformation.

Mit dem Prüfen der zumindest einen Signaturinformation und/oder der zumindest einen Verschlüsselungsinformation kann somit jeweils diese selbst hinsichtlich ihrer Plausibilität getestet werden.

Es ist möglich, dass das Verfahren umfasst: Übertragen des zumindest einen Messsignals, vorzugsweise des signierten und/oder verschlüsselten und/oder geprüften zumindest einen Messsignals, an die Recheneinrichtung und/oder an eine Anzeigeeinrichtung zur Ausgabe des zumindest einen Messsignals und/oder des zumindest einen Authentizitätssignals durch die Recheneinrichtung.

Somit kann beispielsweise einem Benutzer der Ladevorrichtung stets ein Überblick über Messdaten übertragener elektrischer Energiemengen und über eine Überprüfung der Messdaten gegeben werden. Die Anzeigeeinrichtung kann insbesondere zur visuellen und somit graphischen Ausgabe ausgebildet und/oder konfiguriert sein. Die Anzeigeeinrichtung kann natürlich auch zur Ausgabe weiterer Signale und somit Informationen konfiguriert sein.

Gemäß einem weiteren Gesichtspunkt der vorliegenden Erfindung kann vorgesehen sein, dass das Verfahren umfasst: Speichern des zumindest einen Messsignals, vorzugsweise des signierten und/oder verschlüsselten und/oder geprüften zumindest einen Messsignals, in einer zweiten Speichereinheit der Messeinrichtung und/oder in einer Speichereinheit der Recheneinrichtung; und vorzugsweise Überwachen der zweiten Speichereinheit der Messeinrichtung und/oder der Speichereinheit der Recheneinrichtung durch die Recheneinrichtung.

Das Verfahren gemäß der vorliegenden Erfindung kann ferner umfassen: Prüfen einer Authentizität einer Anzeigeeinrichtung zur Ausgabe des zumindest einen Messsignals und/oder des zumindest einen Authentizitätssignals durch die Recheneinrichtung und Generieren zumindest eines Authentizitätssignals bei ermittelter mangelnder Authentizität der Anzeigeeinrichtung durch die Recheneinrichtung; und/oder Prüfen einer Authentizität der Recheneinrichtung durch eine Anzeigeeinrichtung zur Ausgabe des zumindest einen Messsignals und/oder des zumindest einen Authentizitätssignals und Generieren zumindest eines Authentizitätssignals bei ermittelter mangelnder Authentizität der Recheneinrichtung durch die Anzeigeeinrichtung; und/oder Ausgeben des zumindest einen Messsignals, vorzugsweise des signierten und/oder verschlüsselten und/oder geprüften zumindest einen Messsignals, auf einer Anzeigeeinrichtung in graphischer und/oder alphanumerischer Form, wobei zwischen einer eichrechtlich relevanten Information des zumindest einen Messsignals und einer eichrechtlich irrelevanten Information des zumindest einen Messsignals unterschieden wird.

Es ist möglich, dass Prüfen der Authentizität umfasst: Vergleichen einer Identifikationsinformation der Anzeigeeinrichtung und/oder der Recheneinrichtung mit jeweils einer in der Recheneinrichtung und/oder in der Anzeigeeinrichtung als Referenz gespeicherten Identifikationsinformation, vorzugsweise zumindest vor und/oder während des Ladebetriebszustands der Ladevorrichtung, wobei die Identifikationsinformation zumindest ein Identifikationskriterium von folgenden Identifikationskriterien umfasst: Zertifikat; Herstellername; Typ; Seriennummer; und Ermitteln der mangelnden Authentizität, wenn zumindest ein Identifikationskriterium der Identifikationsinformation der Anzeigeeinrichtung und/oder der Recheneinrichtung mit zumindest einem Identifikationskriterium der jeweils in der Recheneinrichtung oder in der Anzeigeeinrichtung als Referenz gespeicherten Identifikationsinformation nach Vergleich nicht übereinstimmt oder davon abweicht.

Das Verfahren gemäß der vorliegenden Erfindung kann ferner umfassen: Prüfen einer Authentizität einer Benutzeridentifikationseinrichtung durch die Recheneinrichtung; und Autorisieren eines Betriebs der Ladevorrichtung bei zumindest ermittelter Authentizität der Benutzeridentifikationseinrichtung durch die Recheneinrichtung, und/oder Speichern einer über eine Benutzeridentifikationseinrichtung eingegebenen Benutzeridentifikationsinformation in einer ersten Speichereinheit der Messeinrichtung und/oder in einer Speichereinheit in der Recheneinrichtung. Es ist möglich, dass die Benutzeridentifikationseinrichtung in eine Anzeigeeinrichtung integriert oder davon separat ausgebildet ist.

Es ist möglich, dass das Verfahren umfasst: Übertragen des zumindest einen Messsignals, vorzugsweise des signierten und/oder verschlüsselten und/oder geprüften zumindest einen Messsignals, und des zumindest einen Authentizitätssignals an einen Backend-Server und Speichern des zumindest einen Messsignals und/oder des zumindest einen Authentizitätssignals in einer Speichereinheit des Backend-Servers.

Die vorliegende Erfindung betrifft nach einem zweiten allgemeinen Gesichtspunkt eine Ladevorrichtung zur Übertragung elektrischer Energie an einen Verbraucher in einem Ladebetriebszustand, vorzugsweise an ein Elektrofahrzeug, wobei die Ladevorrichtung vorzugsweise zur Ausführung des Verfahrens wie hierin offenbart konfiguriert ist, umfassend: eine Versorgungseinrichtung zur Bereitstellung elektrischer Energie an den Verbraucher, vorzugsweise an das Elektrofahrzeug; eine Messeinrichtung zur Erfassung übertragener elektrischer Energie der Ladevorrichtung und zur Generierung zumindest eines Messsignals in Abhängigkeit der übertragenen elektrischen Energie; und eine Recheneinrichtung zur Steuerung und/oder Regelung der Versorgungseinrichtung und der Messeinrichtung mittels jeweils zumindest eines Betriebssignals; wobei die Recheneinrichtung zumindest zur Prüfung einer Authentizität der Versorgungseinrichtung und/oder der Messeinrichtung konfiguriert ist, um bei ermittelter mangelnder Authentizität der Versorgungseinrichtung und/oder der Messeinrichtung zumindest ein Authentizitätssignal zu generieren und in Abhängigkeit des zumindest einen Authentizitätssignals zumindest einen Kontrollbetriebszustand der Recheneinrichtung zu aktivieren.

Es ist möglich, dass die Ladevorrichtung eine Anzeigeeinrichtung zumindest zur Ausgabe des zumindest einen Messsignals und/oder des zumindest einen Authentizitätssignals umfasst, dass die Recheneinrichtung zur Steuerung und/oder Regelung der Anzeigeeinrichtung konfiguriert ist, und die Recheneinrichtung zur Prüfung einer Authentizität der Anzeigeeinrichtung konfiguriert ist, um bei ermittelter mangelnder Authentizität der Anzeigeeinrichtung zumindest ein Authentizitätssignal zu generieren und in Abhängigkeit des zumindest einen Authentizitätssignals den zumindest einen Kontrollbetriebszustand zu aktivieren.

Gemäß einem weiteren Aspekt der vorliegenden Erfindung kann vorgesehen sein, dass die Ladevorrichtung eine Benutzeridentifikationseinrichtung zur Autorisierung des Betriebs der Ladevorrichtung durch einen Benutzer umfasst, wobei die Recheneinrichtung zur Steuerung und/oder Regelung der Benutzeridentifikationseinrichtung konfiguriert ist, und dass die Recheneinrichtung zur Prüfung einer Authentizität der Benutzeridentifikationseinrichtung konfiguriert ist, um bei ermittelter mangelnder Authentizität der Benutzeridentifikationseinrichtung zumindest ein Authentizitätssignal zu generieren und in Abhängigkeit des zumindest einen Authentizitätssignals den zumindest einen Kontrollbetriebszustand zu aktivieren.

Die Messeinrichtung kann eine erste Speichereinheit umfassen und die Messeinrichtung kann zur Speicherung des zumindest einen Messsignals und/oder des zumindest einen Authentizitätssignals in der ersten Speichereinheit konfiguriert sein, wobei vorzugsweise die erste Speichereinheit eine gesicherte Speichereinheit ist.

Gemäß einem weiteren Gesichtspunkt der vorliegenden Erfindung kann vorgesehen sein, dass die Recheneinrichtung und/oder eine Anzeigeeinrichtung zur Ausgabe des zumindest einen Messsignals und/oder des zumindest einen Authentizitätssignals innerhalb einer vorbestimmten Zeitspanne konfiguriert ist/sind. Die vorbestimmte Zeitspanne kann beispielsweise einen Bereich innerhalb weniger Zehntelsekunden, vorzugsweise innerhalb weniger Millisekunden umfassen.

Die Recheneinrichtung kann konfiguriert sein, das zumindest eine Messsignal der Messeinrichtung periodisch und/oder in Abhängigkeit eines Betriebszustands der Versorgungseinrichtung und/oder in Abhängigkeit eines Betriebszustands der Messeinrichtung abzufragen. Mit anderen Worten kann das zumindest eine Messsignal zu definierten und/oder vorgegebenen Zeitpunkten abgefragt werden.

Gemäß einem weiteren Aspekt der vorliegenden Erfindung kann vorgesehen sein, dass die Messeinrichtung einen eichrechtskonformen und/oder MID-konformen Energiezähler umfasst, oder als ein eichrechtskonformer und/oder MID-konformer Energiezähler ausgebildet ist, wobei vorzugsweise der Energiezähler nach Klasse B gemäß EN 50470-3 spezifiziert und/oder zertifiziert ausgebildet ist, und/oder wobei die Messeinrichtung zur Bereitstellung des zumindest einen Messsignals im Open Charge Metering Format (OCMF) konfiguriert ist, welches zumindest eine Messgröße und/oder zumindest eine Identifikationsinformation der Messeinrichtung und/oder zumindest eine Identifikationsinformation der Versorgungseinrichtung umfasst.

Zur Vermeidung von Wiederholungen sollen rein auf die Vorrichtung der erfindungsgemäßen Ladevorrichtung gerichtete und/oder damit in Zusammenhang offenbarte Merkmale auch als verfahrensgemäß offenbart gelten und beanspruchbar sein und umgekehrt.

Die zuvor beschriebenen Ausführungsbeispiele und Merkmale der vorliegenden Erfindung sind beliebig miteinander kombinierbar. Weitere oder andere Einzelheiten und vorteilhafte Wirkungen der vorliegenden Erfindung werden im Folgenden unter Bezugnahme auf die beigefügten Figuren näher erläutert.

Es zeigen:
- Fig. 1: ein erstes Ausführungsbeispiel der Ladevorrichtung gemäß der vorliegenden Erfindung in einer schematischen Darstellung;
- Fig. 2: ein erstes Ausführungsbeispiel des Verfahrens gemäß der vorliegenden Erfindung.

Gleiche oder funktional äquivalente Komponenten oder Elemente sind in den Figuren mit denselben Bezugszeichen gekennzeichnet. Zu deren Erläuterung wird teilweise auch auf die Beschreibung anderer Ausführungsbeispiele und/oder Figuren verwiesen, um Wiederholungen zu vermeiden.

Die folgende detaillierte Beschreibung der in den Figuren dargestellten Ausführungsbeispiele dient zur näheren Veranschaulichung oder Verdeutlichung und soll den Umfang der vorliegenden Erfindung in keiner Weise beschränken.

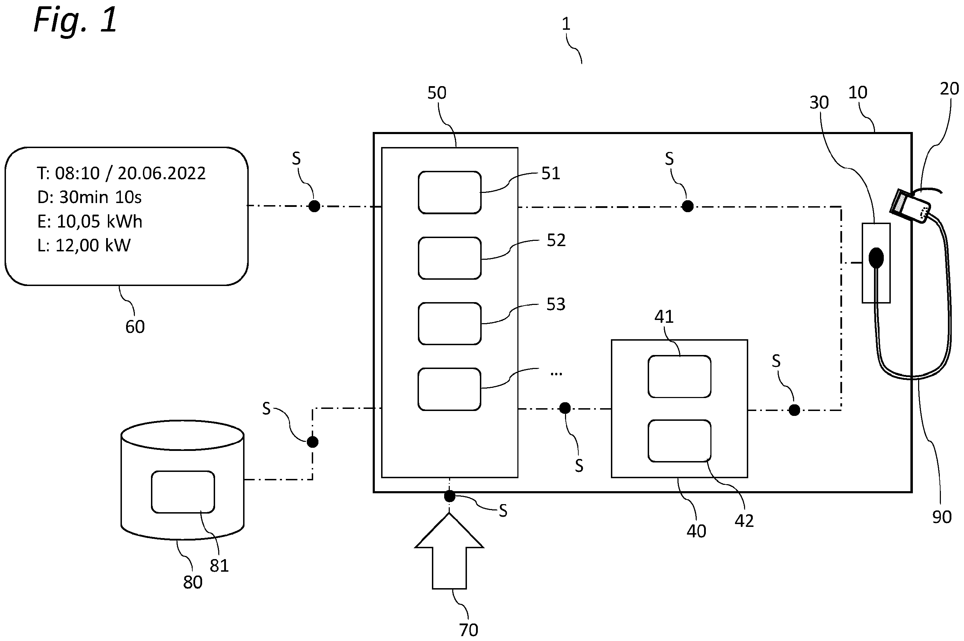

Figur 1 zeigt in einer schematischen Darstellung ein Ausführungsbeispiel der Ladevorrichtung 1 gemäß der vorliegenden Erfindung.

Die Ladevorrichtung 1 ist vorzugsweise Bestandteil einer öffentlichen und/oder gewerblich genutzten Ladestation. Die Ladevorrichtung 1 kann für Ladevorgänge mittels Gleichstrom und/oder mittels Wechselstrom konfiguriert sein und dient zur Übertragung elektrischer Energie an einen Verbraucher in einem Ladebetriebszustand und somit in einem Zustand, bei welchem ein Ladevorgang des Verbrauchers durch die oder über die Ladevorrichtung 1 stattfindet. Der Verbraucher ist vorzugsweise ein elektrisch antreibbares Fahrzeug (Elektrofahrzeug) mit zumindest einem Akkumulator zur Speicherung übertragener elektrischer Energie.

Die Ladevorrichtung 1 umfasst eine Ladesäule 10, ein Ladekabel 90 und einen Steckverbinder 20 in Form eines Ladesteckers. Der Steckverbinder 20 ist hierbei über das Ladekabel 90 fest mit der Ladesäule 10 und insbesondere mit einer Versorgungseinrichtung 30 der Ladevorrichtung 1 verbunden. Die Versorgungseinrichtung 30 ist beispielsweise mit einem öffentlichen elektrischen Energieversorgungsnetz verbunden und dient zur Bereitstellung elektrischer Energie an den Verbraucher. Die Versorgungseinrichtung 30 kann beispielsweise zumindest ein Leistungselektronikmodul und/der zumindest ein Wandlungsmodul und/oder zumindest ein Netzteilmodul umfassen und elektrische Energie aus dem öffentlichen elektrischen Energieversorgungsnetz wandeln, um den Anforderungen und der Funktionalität der Ladevorrichtung 1 nachzukommen.

Die Ladevorrichtung 1 umfasst eine Messeinrichtung 40 zur Erfassung übertragener elektrischer Energie der Ladevorrichtung 1 und zur Generierung zumindest eines Messsignals S in Abhängigkeit der übertragenen elektrischen Energie. Die Messeinrichtung 40 umfasst eine erste Speichereinheit 41 und eine zweite Speichereinheit 42. Die erste Speichereinheit 41 ist vorzugsweise als eine gesicherte Speichereinheit zur Speicherung von Informationen für einen definierten oder bestimmten Zeitraum ausgebildet und/oder konfiguriert. Die zweite Speichereinheit 42 kann zur flüchtigen und somit nichtdauerhaften Speicherung von Informationen ausgebildet und/oder konfiguriert sein. Die Messeinrichtung 40 umfasst einen eichrechtskonformen und/oder MID-konformen Energiezähler, welcher vorzugsweise nach Klasse B gemäß EN 50470-3 spezifiziert und/oder zertifiziert ausgebildet ist. Zudem ist die Messeinrichtung 40 zur Bereitstellung des zumindest einen Messsignals S im so genannten Open Charge Metering Format (OCMF) konfiguriert, welches zumindest eine Messgröße und/oder zumindest eine Identifikationsinformation der Messeinrichtung 40 und/oder zumindest eine Identifikationsinformation der Versorgungseinrichtung 30 und/oder zumindest eine Identifikationsinformation einer Anzeigeeinrichtung 60 umfasst.

Ferner umfasst die Ladevorrichtung 1 eine Anzeigeeinrichtung 60 oder ist zumindest mit einer Anzeigeeinrichtung 60 verbunden. Die Anzeigeeinrichtung 60 kann in dem Gehäuse der Ladesäule 10 integriert sein und dient zur Interaktion mit einem Benutzer im Zuge eines Ladevorgangs. Die Anzeigeeinrichtung 60 kann beispielsweise als ein so genannter Touch-Screen oder als ein sogenanntes Bedien-Panel ausgebildet sein und zur graphischen Ausgabe von Informationen, sowie zur Abfrage und Eingabe von Benutzerbefehlen dienen. Die Anzeigeeinrichtung 60 ist vorzugsweise eine einzige oder eine zentrale Anzeigeeinrichtung der Ladevorrichtung 1, welche einem Benutzer relevante Informationen über den Ladevorgang selbst und die Abrechnung des Ladevorgangs anzeigt. Vorzugsweise dient die Anzeigeeinrichtung 60 zur Anzeige der übertragenen elektrischen Energiemenge und/oder der Ladedauer. Zusätzlich ist es möglich, die dadurch entstandenen Kosten für die übertragene elektrische Energiemenge anzuzeigen.

Wie sich aus der Darstellung in Figur 1 ergibt, werden mittels der Anzeigeeinrichtung 60 relevante Informationen und insbesondere abrechnungsrelevante Informationen angezeigt. So wird beispielsweise eine aktuelle Uhrzeit, ein aktuelles Datum, eine Ladedauer, eine von der Ladevorrichtung 1 übertragene Energiemenge in Kilowattstunden (kWh) und eine elektrische Leistung in Kilowatt (kW) angezeigt.

Die Ladevorrichtung 1 umfasst ferner eine Recheneinrichtung 50 zur Steuerung und/oder Regelung zumindest der Versorgungseinrichtung 30 und der Messeinrichtung 40 mittels jeweils zumindest eines Betriebssignals S. Die Recheneinrichtung 50 kann zur Steuerung und/oder Regelung weiterer Komponenten und Elemente der Ladevorrichtung 1 konfiguriert sein (Anzeigeeinrichtung 60, Signal-Sende-Empfangs-Einrichtung, Kühleinrichtung, etc.). Die Recheneinrichtung 50 umfasst vorzugsweise eine Speichereinheit 51, eine zentrale Prozessoreinheit 52, Ein- und Ausgabe-Schnittstellen 53 für Betriebssignale S und somit Signale zur Steuerung und/oder Regelung jeweiliger Komponenten der Ladevorrichtung 1, und weitere Einheiten, die nicht näher genannt und gekennzeichnet sind. Die zentrale Prozessoreinheit 52 kann zur Ausführung von Softwarealgorithmen einer implementierten Steuerungs- und/oder Regelungssoftware konfiguriert sein. Insbesondere ist die zentrale Prozessoreinheit 52 zur Ausführung von Softwarealgorithmen im Zuge eines manipulationsgeschützten Verarbeitens und/oder Ausgebens von Messdaten der Ladevorrichtung 1 konfiguriert.

Mit anderen Worten kann die Recheneinrichtung 50 zumindest teilweise in Hardware und zumindest teilweise in Software realisiert sein. Die Recheneinrichtung 50 stellt somit den so genannten Ladecontroller für die Steuerung und/oder Regelung der Ladevorrichtung 1 dar. Beispielsweise kann die Recheneinrichtung 50 zur Ausführung eines Betriebssystems zur Steuerung und/oder Regelung der Ladevorrichtung 1, das heißt insbesondere der Messeinrichtung 40, der Versorgungseinrichtung 30 und der Anzeigeeinrichtung 60 konfiguriert sein. Ein Schwerpunkt liegt allerdings in der Ausführung entsprechender Softwarealgorithmen zum Prüfen einer Authentizität, Generieren eines Authentizitätssignals und Aktivieren eines Kontrollbetriebszustands der Recheneinrichtung, welche gemäß der vorliegenden Erfindung entsprechend ausgebildet sind und bei Ausführung mittels der zentralen Prozessoreinheit 52 die gewünschte Funktionalität der Ladevorrichtung 1 im Hinblick auf Manipulationsschutz realisieren. Insgesamt gesehen ist die Ladevorrichtung 1 durch einen im Wesentlichen softwarebasierten Manipulationsschutz gekennzeichnet, sodass mechanische Schutzmechanismen wie beispielsweise Verplombungen an Gehäuseteilen oder Gehäusewänden entbehrlich sind. Hierzu ist die Recheneinrichtung 50 zur Prüfung einer Authentizität zumindest der Versorgungseinrichtung 30 und/oder der Messeinrichtung 40 und/oder der Anzeigeeinrichtung 60 konfiguriert, um bei ermittelter mangelnder Authentizität der Versorgungseinrichtung 30 und/oder der Messeinrichtung 40 und/oder der Anzeigeeinrichtung 60 zumindest ein jeweiliges Authentizitätssignal S zu generieren und in Abhängigkeit des zumindest einen jeweiligen Authentizitätssignals S vorzugsweise zumindest einen Kontrollbetriebszustand der Recheneinrichtung 50 zu aktivieren und die Ladevorrichtung 1 somit in einem entsprechend erweiterten Betriebszustand zu betreiben. Es ist möglich, dass weiterhin eine Übertragung elektrischer Energie im Zuge eines Ladevorgangs stattfindet oder zumindest möglich ist. Vorzugsweise werden Messdaten weiterhin ausgewertet und beurteilt und als nicht-verifizierte Daten insbesondere verfälschungssicher markiert. Derartige Daten bilden vorzugsweise keine Grundlage für eine Abrechnung des Ladevorgangs.

Die Ladevorrichtung 1 gemäß der vorliegenden Erfindung ist ferner vorzugsweise in einer Signalkommunikationsverbindung mit einem externen und/oder unabhängigen Backend-Server 80, welcher eine Speichereinheit 81 umfasst und zur Bildung eines Backups und/oder Speicherung von Informationen der Ladevorrichtung 1 dient. Der Backend-Server 80 kann beispielsweise konfiguriert sein, erzeugte und übermittelte abrechnungsrelevante Informationen im Zuge eines Ladevorgangs für einen bestimmten Zeitraum, das heißt für eine bestimmte Zeitdauer zu speichern.

Ferner umfasst die Ladevorrichtung 1 eine Benutzeridentifikationseinrichtung 70 zur Autorisierung des Betriebs der Ladevorrichtung durch einen Benutzer. Die Recheneinrichtung 50 ist ebenfalls zur Steuerung und/oder Regelung der Benutzeridentifikationseinrichtung 70 konfiguriert. Insbesondere ist die Recheneinrichtung 50 zur Prüfung einer Authentizität der Benutzeridentifikationseinrichtung 70 konfiguriert, um bei ermittelter mangelnder Authentizität der Benutzeridentifikationseinrichtung 70 zumindest ein Authentizitätssignal S zu generieren und in Abhängigkeit des zumindest einen Authentizitätssignals S den zumindest einen Kontrollbetriebszustand zu aktivieren. Es ist möglich, dass die Benutzeridentifikationseinrichtung 70 in die Anzeigeeinrichtung 60 integriert ist oder zumindest mit der Anzeigeeinrichtung 60 verbunden ist.

Es versteht sich, dass die Ladeeinrichtung 1 gemäß der vorliegenden Erfindung weitere Komponenten und Elemente umfassen kann, wie beispielsweise Überspannungsschutzeinrichtungen, Reihenklemmeinrichtungen, Fehlerstromerkennungseinrichtungen, etc., welche hierin aus Gründen der Übersichtlichkeit nicht näher beschrieben werden.

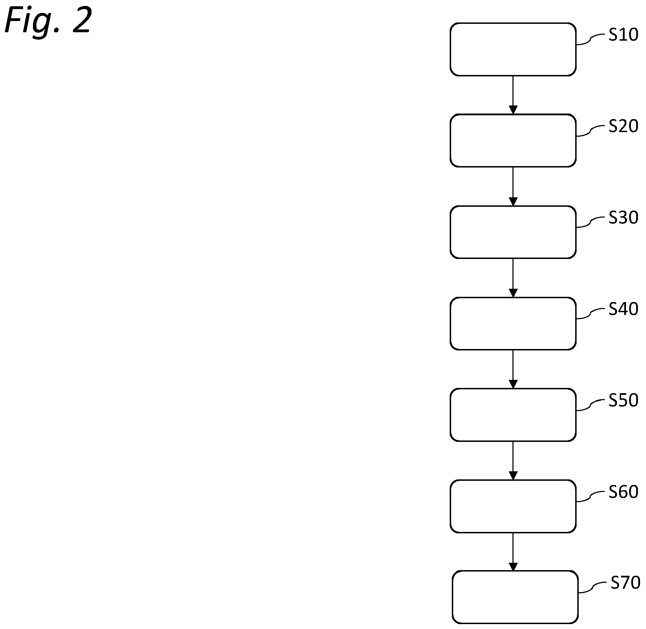

Nachfolgend wird nun anhand von Figur 2 ein Ausführungsbeispiel des erfindungsgemäßen Verfahrens beschrieben. Dabei wird auf eine nähere Beschreibung von Komponenten und Elementen der Ladevorrichtung 1 teilweise verzichtet, um Wiederholungen zu vermeiden.

Das Verfahren zum manipulationsgeschützten Verarbeiten und/oder Ausgeben von Messdaten der Ladevorrichtung 1 umfasst im Zuge eines Ladevorgangs eines Verbrauchers in Form eines Elektrofahrzeugs in Abschnitt S10 ein Aufbauen einer Kommunikationsverbindung der Recheneinrichtung 50 mit der Versorgungseinrichtung 30 und der Messeinrichtung 40. Die Kommunikationsverbindung kann drahtlos und/oder drahtgebundenen ausgebildet sein und dient zur Übertragung von zumindest einem Signal, beispielsweise zumindest einem Betriebssignal S zur Steuerung und/oder Regelung, welches im Weiteren eine bestimmte Information umfasst oder repräsentiert.

Ferner kann auch in Abschnitt S10 zusätzlich ein Aufbauen einer Kommunikationsverbindung entsprechend drahtloser und/oder drahtgebundener Konfiguration der Recheneinrichtung 50 mit der Anzeigeeinrichtung 60 erfolgen.

Durch die aufgebaute Kommunikationsverbindung wird sichergestellt, dass die Recheneinrichtung 50 als zentrale Recheneinrichtung der Ladevorrichtung 1 mit sämtlichen Komponenten und Elementen der Ladevorrichtung 1 in Signalaustausch und somit in einem Informationsaustausch steht, welche an der Realisierung des Ladevorgangs teilnehmen. Damit wird mehr oder weniger eine ganzheitliche Prüfung und/oder Überwachung hinsichtlich Authentizität gewährleistet und eine Manipulation umgehend erkennbar und/oder bestimmbar.

In Abschnitt S20 erfolgt nun durch die Recheneinrichtung 50 ein Prüfen einer Authentizität der Versorgungseinrichtung 30 und/oder der Messeinrichtung 40 und/oder der Anzeigeeinrichtung 60. Im Zuge des Prüfens der Authentizität erfolgt vorzugsweise in Vergleichen einer jeweiligen Identifikationsinformation der Versorgungseinrichtung 30, der Messeinrichtung und/oder der Anzeigeeinrichtung 60, also einer jeweiligen Identifikationsinformation, welche auf der jeweiligen Einrichtung 30, 40 ,60 gegenwärtig hinterlegt, das heißt gespeichert ist, mit jeweils einer in der Recheneinrichtung 50 als Referenz gespeicherten Identifikationsinformation. Ein derartiges Vergleichen kann zumindest vor dem Ladebetriebszustand und somit vor der Übertragung elektrischer Energie und/oder während des Ladebetriebszustands der Ladevorrichtung 1 erfolgen.

Die Identifikationsinformation kann zumindest ein Identifikationskriterium von folgenden Identifikationskriterien umfassen: Zertifikat, Herstellername, Typbezeichnung, Seriennummer, Softwareversion und/oder Hardwareversion der jeweiligen Einrichtung 30, 40, 60.

Ferner umfasst Prüfen der Authentizität ein Ermitteln und somit ein Feststellen der mangelnden Authentizität, wenn zumindest ein jeweiliges Identifikationskriterium der Identifikationsinformation der Versorgungseinrichtung 30 und/oder der Messeinrichtung 40 und/oder der Anzeigeeinrichtung 60 mit zumindest einem Identifikationskriterium der jeweils in der Recheneinrichtung 50 als Referenz gespeicherten Identifikationsinformation nach Vergleich nicht übereinstimmt und somit von der jeweiligen als Referenz gespeicherten Identifikationsinformation abweicht. Es versteht sich, dass das Prüfen der Authentizität zumindest teilweise durch zumindest einen Softwarealgorithmus, welcher auf der Recheneinrichtung 50 abläuft und somit von der zentralen Prozessoreinheit 52 der Recheneinrichtung 50 ausgeführt wird, realisiert und/oder umgesetzt wird.

Es ist zusätzlich möglich, dass Prüfen der Authentizität auch umfasst: Speichern der verglichenen Identifikationsinformation der Versorgungseinrichtung 30 und/oder der Messeinrichtung 40 und/oder der Anzeigeeinrichtung 60 in der ersten Speichereinheit 41 der Messeinrichtung 40 mittels zumindest eines Betriebssignals S der Recheneinrichtung 50, wobei vorzugsweise die erste Speichereinheit 41 eine gesicherte Speichereinheit 41 ist. Es ist zusätzlich möglich, dass auch ein Speichern der verglichenen Identifikationsinformation der jeweiligen Einrichtung 30, 40, 60 in der Speichereinheit 51 der Recheneinrichtung 50 stattfindet.

In einem Abschnitt S30 erfolgt ein Generieren zumindest eines Authentizitätssignals S bei ermittelter mangelnder Authentizität der Versorgungseinrichtung 30 und/oder der Messeinrichtung 40 und/oder der Anzeigeeinrichtung 60 durch die Recheneinrichtung 50. Mit anderen Worten wird bei ermittelter oder festgestellter mangelnder Authentizität einer Einrichtung 30, 40, 60 das Vorliegen einer veränderten Konfiguration der Ladevorrichtung 1 insgesamt und somit einer Manipulation erkannt und eine entsprechende Information, vorzugsweise in Form zumindest eines Authentizitätssignals S, generiert.

Bei Ausführung des Verfahrens erfolgt in einem Abschnitt S40 ein Aktivieren zumindest eines Kontrollbetriebszustands der Recheneinrichtung 50 in Abhängigkeit des zumindest einen Authentizitätssignals S. Der Kontrollbetriebszustand stellt einen speziellen Betriebsmodus oder einen speziellen Betriebszustand der Recheneinrichtung 50 und somit der Ladevorrichtung 1 dar, welcher bei erkannter mangelnder Authentizität aktiviert wird.

Der Kontrollbetriebszustand kann sodann umfassen: Generieren zumindest eines Verifikationssignals S in Abhängigkeit des zumindest einen Authentizitätssignals S und somit Generieren oder Erzeugen einer Verifikationsinformation, und Übertragen des zumindest einen Verifikationssignals S an den Backend-Server 80 durch die Recheneinrichtung 50, beispielsweise mittels einer Signal-Sende-Empfangs-Einrichtung, welche in den Figuren nicht näher dargestellt ist.

Zusätzlich oder alternativ kann ein Deaktivieren des Ladebetriebszustands der Ladevorrichtung oder Deaktivieren des Initialisierens des Ladebetriebszustands der Ladevorrichtung, wenn der Ladevorgang eines Elektrofahrzeugs bereits gestartet wurde oder sich in der Initialisierungsphase befindet, stattfinden.

Zusätzlich oder alternativ kann ein Aufzeichnen und somit ein Protokollieren des zumindest einen Authentizitätssignals S der Versorgungseinrichtung 30 und/oder der Messeinrichtung 40 und/oder der Anzeigeeinrichtung 60 durch die Recheneinrichtung 50 erfolgen. Mit anderen Worten kann das Ergebnis eines durch einen Softwarealgorithmus ausgeführten Manipulationstests einer Komponente der Ladevorrichtung 1 zu Dokumentationszwecken erfasst und aufgezeichnet werden.

Darüber hinaus kann bei dem Verfahren gemäß der vorliegenden Erfindung bei ermittelter mangelnder Authentizität zumindest einer Einrichtung 30, 40, 60 in einem Abschnitt S50 auch ein Prüfen einer Plausibilität des zumindest einen Messsignals S in Abhängigkeit einer Beurteilungsinformation durch die Recheneinrichtung 50 erfolgen. Mit anderen Worten ist es mit dem Verfahren gemäß der vorliegenden Erfindung möglich, Messdaten hinsichtlich ihrer Vollständigkeit und Authentizität zu verarbeiten und/oder auszuwerten und aus den oder anhand der Messdaten auf eine Manipulation von Komponenten zu schließen.

Die Beurteilungsinformation kann zumindest ein Beurteilungskriterium von folgenden Beurteilungskriterien umfassen: Messwertgröße, Zeitstempel, Signatur, und/oder auch gespeicherte Identifikationskriterien der Messeinrichtung 40. Zusätzlich kann ein Generieren zumindest eines Prüfsignals S bei ermittelter mangelnder Plausibilität des zumindest einen Messsignals S und ein Kennzeichnen des zumindest einen Messsignals S und somit der Messdaten einer übertragenen Energiemenge mit zumindest einem Prüfsignal S bei ermittelter mangelnder Plausibilität durch die Recheneinrichtung 50 erfolgen.

Zusätzlich oder alternativ kann ein Prüfen zumindest einer Signaturinformation und/oder zumindest einer Verschlüsselungsinformation durch die Recheneinrichtung 50 stattfinden, und ein Signieren des zumindest einen Messsignals S durch die Messeinrichtung 40 mit der geprüften zumindest einen Signaturinformation in Abhängigkeit zumindest eines Betriebssignals S; und/oder ein Verschlüsseln des zumindest einen Messsignals S durch die Messeinrichtung 40 mit der geprüften zumindest einen Verschlüsselungsinformation in Abhängigkeit zumindest eines Betriebssignals S.

Die Signaturinformation kann einen öffentlichen Teil eines Signaturzertifikats und einen nicht-öffentlichen Teil eines Signaturzertifikats umfassen, und/oder die Verschlüsselungsinformation kann einen nicht-öffentlichen Teil eines Verschlüsselungszertifikats umfassen.

In Abschnitt S60 kann sodann ein Ausgeben, das heißt Anzeigen des zumindest einen Authentizitätssignals S und/oder des zumindest einen Verifikationssignals S und/oder des zumindest einen Plausibilitätssignals S und somit der jeweiligen Information auf der Anzeigeeinrichtung 60 erfolgen. Die Ausgabe und somit Anzeige kann in graphischer und/oder in alphanumerischer Form erfolgen. Der Benutzer erhält somit umgehend Informationen zum Zustand der Ladevorrichtung 1 und/oder zu einzelnen Komponenten und Einrichtungen 30, 40, 60 der Ladevorrichtung 1 in Bezug auf Manipulation, sowie über Messdaten übertragener elektrischer Energie im Zuge eines Ladevorgangs. Die Ladevorrichtung 1 zeichnet sich somit beispielsweise durch eine Transparenz gegenüber dem Benutzer aus.

Im Zuge des Ausgebens von entsprechenden oder jeweiligen Signalen und somit Informationen kann in einem Abschnitt S70 oder auch in einem der vorhergehenden Abschnitte S10 bis S60 ein Prüfen einer Authentizität der Recheneinrichtung 50 durch die Anzeigeeinrichtung 60 und Generieren zumindest eines Authentizitätssignals S bei ermittelter mangelnder Authentizität der Recheneinrichtung 50 durch die Anzeigeeinrichtung 60 erfolgen. Hierzu kann die Anzeigeeinrichtung 60 selbst über eine entsprechende Anzeigerecheneinheit zur Auswertung und/oder Verarbeitung umfassen, welche in den Figuren aus Gründen der Übersichtlichkeit nicht dargestellt ist. Selbstverständlich ist es möglich, das Ergebnis der Prüfung der Authentizität der Recheneinrichtung 50 durch zumindest ein Authentizitätssignal S an der Anzeigeeinrichtung 60 auszugehen.

Ferner ist es auch möglich, dass hierin offenbarte Abschnitte oder Prozeduren im Zuge des Verfahrens und insbesondere bei Ausführung des Verfahrens zumindest teilweise zeitlich parallel ausgeführt werden können und/oder auch in insbesondere zeitlich unterschiedlicher Reihenfolge. Es ist ferner möglich, die weiteren hierin offenbarten Abschnitte oder Prozeduren des Verfahrens gemäß der vorliegenden Erfindung, welche im Zuge der Figurenbeschreibung nicht erwähnt wurden, entsprechend miteinander zu kombinieren.

Mit der vorliegenden Erfindung wird eine Ladevorrichtung 1 und ein Verfahren zum Betrieb der Ladevorrichtung 1 bereitgestellt, welches Manipulation von Komponenten und Elementen der Ladevorrichtung 1 umgehend erkennt und dem Benutzer in entsprechender Form mitteilt, sodass ein ordnungsgemäßer Betrieb und somit ein manipulationsgeschütztes verarbeiten und/oder ausgeben von Messdaten der Ladevorrichtung 1 gewährleistet wird.

Die vorliegende Erfindung ist nicht auf die vorstehend beschriebenen Ausführungsbeispiele beschränkt. Vielmehr ist, wie bereits erwähnt, eine Vielzahl von Varianten und Abwandlungen möglich, die ebenfalls von dem Erfindungsgedanken Gebrauch machen und deshalb in den Schutzbereich fallen. Vorzugsweise beansprucht die vorliegende Erfindung auch Schutz für den Gegenstand und die Merkmale der Unteransprüche unabhängig von den in Bezug genommenen Ansprüchen.

### Bezugszeichenliste

- 1: Ladevorrichtung
- 10: Ladesäule
- 20: Steckverbinder
- 30: Versorgungseinrichtung
- 40: Messeinrichtung
- 41: Speichereinheit
- 42: Speichereinheit
- 50: Recheneinrichtung
- 51: Speichereinheit
- 52: zentrale Prozessoreinheit
- 53: Ein- und Ausgabe-Schnittstellen
- 60: Anzeigeeinrichtung
- 70: Benutzeridentifikationseinrichtung
- 80: Backend-Server
- 81: Speichereinheit
- 90: Ladekabel

## Patentansprüche

1. Verfahren zum manipulationsgeschützten Verarbeiten und/oder Ausgeben von Messdaten einer Ladevorrichtung (1) zur Übertragung elektrischer Energie an einen Verbraucher in einem Ladebetriebszustand,
wobei eine Messeinrichtung (40) der Ladevorrichtung (1) zur Erfassung übertragener elektrischer Energie der Ladevorrichtung (1) und zur Generierung zumindest eines Messsignals (S) in Abhängigkeit der übertragenen elektrischen Energie konfiguriert ist, und
wobei eine Recheneinrichtung (50) der Ladevorrichtung (1) zur Steuerung und/oder Regelung der Messeinrichtung (40) und einer Versorgungseinrichtung (30) der Ladevorrichtung (1) zur Bereitstellung elektrischer Energie an den Verbraucher mittels jeweils zumindest eines Betriebssignals (S) konfiguriert ist,
wobei das Verfahren umfasst:
• Aufbauen einer Kommunikationsverbindung der Recheneinrichtung (50) mit der Versorgungseinrichtung (30) und/oder der Messeinrichtung (40);
• Prüfen einer Authentizität der Versorgungseinrichtung (30) und/oder der Messeinrichtung (40) durch die Recheneinrichtung (50);
• Generieren zumindest eines Authentizitätssignals (S) bei ermittelter mangelnder Authentizität der Versorgungseinrichtung (30) und/oder der Messeinrichtung (40) durch die Recheneinrichtung (50);
• Aktivieren zumindest eines Kontrollbetriebszustands der Recheneinrichtung (50) in Abhängigkeit des zumindest einen Authentizitätssignals (S).

2. Verfahren nach Anspruch 1,
wobei der zumindest eine Kontrollbetriebszustand umfasst:
• Generieren zumindest eines Verifikationssignals (S) in Abhängigkeit des zumindest einen Authentizitätssignals (S) und Übertragen des zumindest einen Verifikationssignals (S) an einen Backend-Server (80) durch die Recheneinrichtung (50); und/oder
• Deaktivieren des Ladebetriebszustands der Ladevorrichtung (1) oder Deaktivieren des Initialisierens des Ladebetriebszustands der Ladevorrichtung (1); und/oder
• Aufzeichnen des zumindest einen Authentizitätssignals (S) der Versorgungseinrichtung (30) und/oder der Messeinrichtung (40) durch die Recheneinrichtung (50).

3. Verfahren nach Anspruch 1 oder 2,
wobei Prüfen der Authentizität umfasst:
• Vergleichen einer Identifikationsinformation der Versorgungseinrichtung (30) und/oder der Messeinrichtung (40) mit jeweils einer in der Recheneinrichtung (50) als Referenz gespeicherten Identifikationsinformation, vorzugsweise zumindest vor und/oder während des Ladebetriebszustands der Ladevorrichtung (1);
wobei die Identifikationsinformation zumindest ein Identifikationskriterium von folgenden Identifikationskriterien umfasst: Zertifikat; Herstellername; Typ; Seriennummer; und
• Ermitteln der mangelnden Authentizität, wenn zumindest ein Identifikationskriterium der Identifikationsinformation der Versorgungseinrichtung (30) und/oder der Messeinrichtung (40) mit zumindest einem Identifikationskriterium der jeweils in der Recheneinrichtung (50) als Referenz gespeicherten Identifikationsinformation nach Vergleich nicht übereinstimmt.

4. Verfahren nach Anspruch 3,
wobei Prüfen der Authentizität umfasst:
• Speichern der verglichenen Identifikationsinformation der Versorgungseinrichtung (30) und/oder der Messeinrichtung (40) in einer ersten Speichereinheit (41) der Messeinrichtung (40) mittels zumindest eines Betriebssignals (S) der Recheneinrichtung (50), wobei vorzugsweise die erste Speichereinheit (41) eine gesicherte Speichereinheit (41) ist.

5. Verfahren nach einem der vorhergehenden Ansprüche,
wobei Prüfen der Authentizität umfasst:
• Auslesen einer Identifikationsinformation der Versorgungseinrichtung (30) und/oder der Messeinrichtung (40) durch die Recheneinrichtung (50) und Speichern der ausgelesenen Identifikationsinformation in einer Speichereinheit (51) der Recheneinrichtung (50), vorzugsweise in Abhängigkeit von zumindest einem Kriterium, vorzugsweise eines Zertifikats.

6. Verfahren nach einem der vorhergehenden Ansprüche,
umfassend:
• Prüfen einer Plausibilität des zumindest einen Messsignals (S) in Abhängigkeit einer Beurteilungsinformation durch die Recheneinrichtung (50),
wobei die Beurteilungsinformation zumindest ein Beurteilungskriterium von folgenden Beurteilungskriterien umfasst: Messwertgröße, Zeitstempel, Signatur, gespeicherte Identifikationskriterien der Messeinrichtung (40);
• Generieren zumindest eines Prüfsignals (S) bei ermittelter mangelnder Plausibilität des zumindest einen Messsignals (S); und
• Kennzeichnen des zumindest einen Messsignals (S) mit zumindest einem Prüfsignal (S) bei ermittelter mangelnder Plausibilität durch die Recheneinrichtung (50).

7. Verfahren nach einem der vorhergehenden Ansprüche, umfassend:
• Prüfen zumindest einer Signaturinformation und/oder zumindest einer Verschlüsselungsinformation durch die Recheneinrichtung (50); und
• Signieren des zumindest einen Messsignals (S) durch die Messeinrichtung (40) mit der geprüften zumindest einen Signaturinformation in Abhängigkeit zumindest eines Betriebssignals (S); und/oder
• Verschlüsseln des zumindest einen Messsignals (S) durch die Messeinrichtung (40) mit der geprüften zumindest einen Verschlüsselungsinformation in Abhängigkeit zumindest eines Betriebssignals (S),
wobei die zumindest eine Signaturinformation einen öffentlichen Teil eines Signaturzertifikats und einen nicht-öffentlichen Teil eines Signaturzertifikats umfasst, und/oder
wobei die zumindest eine Verschlüsselungsinformation einen nicht-öffentlichen Teil eines Verschlüsselungszertifikats umfasst.

8. Verfahren nach einem der vorhergehenden Ansprüche, umfassend:
• Übertragen des zumindest einen Messsignals (S), vorzugsweise des signierten und/oder verschlüsselten und/oder geprüften zumindest einen Messsignals (S), an die Recheneinrichtung (50) und/oder an eine Anzeigeeinrichtung (60) zur Ausgabe des zumindest einen Messsignals (S) und/oder des zumindest einen Authentizitätssignals (S) durch die Recheneinrichtung (50).

9. Verfahren nach einem der vorhergehenden Ansprüche, umfassend:
• Speichern des zumindest einen Messsignals (S), vorzugsweise des signierten und/oder verschlüsselten und/oder geprüften zumindest einen Messsignals (S), in einer zweiten Speichereinheit (42) der Messeinrichtung (40) und/oder in einer Speichereinheit (51) der Recheneinrichtung (50); und vorzugsweise
• Überwachen der zweiten Speichereinheit (42) der Messeinrichtung (40) und/oder der Speichereinheit (51) der Recheneinrichtung (50) durch die Recheneinrichtung (50).

10. Verfahren nach einem der vorhergehenden Ansprüche, umfassend:
• Prüfen einer Authentizität einer Anzeigeeinrichtung (60) zur Ausgabe des zumindest einen Messsignals (S) und/oder des zumindest einen Authentizitätssignals (S) durch die Recheneinrichtung (50) und Generieren zumindest eines Authentizitätssignals (S) bei ermittelter mangelnder Authentizität der Anzeigeeinrichtung (60) durch die Recheneinrichtung (50); und/oder
• Prüfen einer Authentizität der Recheneinrichtung (50) durch eine Anzeigeeinrichtung (60) zur Ausgabe des zumindest einen Messsignals (S) und/oder des zumindest einen Authentizitätssignals (S) und Generieren zumindest eines Authentizitätssignals (S) bei ermittelter mangelnder Authentizität der Recheneinrichtung (50) durch die Anzeigeeinrichtung (60); und/oder
• Ausgeben des zumindest einen Messsignals (S), vorzugsweise des signierten und/oder verschlüsselten und/oder geprüften zumindest einen Messsignals (S), auf einer Anzeigeeinrichtung (60) in graphischer und/oder alphanumerischer Form, wobei zwischen einer eichrechtlich relevanten Information des zumindest einen Messsignals (S) und einer eichrechtlich irrelevanten Information des zumindest einen Messsignals (S) unterschieden wird.

11. Verfahren nach Anspruch 10, umfassend:
wobei Prüfen der Authentizität umfasst:
• Vergleichen einer Identifikationsinformation der Anzeigeeinrichtung (60) und/oder der Recheneinrichtung (130) mit jeweils einer in der Recheneinrichtung (50) und/oder in der Anzeigeeinrichtung (60) als Referenz gespeicherten Identifikationsinformation, vorzugsweise zumindest vor und/oder während des Ladebetriebszustands der Ladevorrichtung (1),
wobei die Identifikationsinformation zumindest ein Identifikationskriterium von folgenden Identifikationskriterien umfasst: Zertifikat; Herstellername; Typ; Seriennummer; und
• Ermitteln der mangelnden Authentizität, wenn zumindest ein Identifikationskriterium der Identifikationsinformation der Anzeigeeinrichtung (60) und/oder der Recheneinrichtung (50) mit zumindest einem Identifikationskriterium der jeweils in der Recheneinrichtung (50) oder in der Anzeigeeinrichtung (60) als Referenz gespeicherten Identifikationsinformation nach Vergleich nicht übereinstimmt.

12. Verfahren nach einem der vorhergehenden Ansprüche, umfassend:
• Prüfen einer Authentizität einer Benutzeridentifikationseinrichtung (70) durch die Recheneinrichtung (50); und
• Autorisieren eines Betriebs der Ladevorrichtung (1) bei zumindest ermittelter Authentizität der Benutzeridentifikationseinrichtung (70) durch die Recheneinrichtung (50), und/oder
• Speichern einer über eine Benutzeridentifikationseinrichtung (70) eingegebenen Benutzeridentifikationsinformation in einer ersten Speichereinheit der Messeinrichtung (40).

13. Verfahren nach einem der vorhergehenden Ansprüche, umfassend:
• Übertragen des zumindest einen Messsignals (S), vorzugsweise des signierten und/oder verschlüsselten und/oder geprüften zumindest einen Messsignals (S), und des zumindest einen Authentizitätssignals (S) an einen Backend-Server (80) und Speichern des zumindest einen Messsignals (S) und/oder des zumindest einen Authentizitätssignals (S) in einer Speichereinheit (81) des Backend-Servers (80).

14. Ladevorrichtung (1) zur Übertragung elektrischer Energie an einen Verbraucher in einem Ladebetriebszustand, wobei die Ladevorrichtung (1) vorzugsweise zur Ausführung des Verfahrens gemäß einem der vorhergehenden Ansprüche konfiguriert ist,
umfassend:
eine Versorgungseinrichtung (30) zur Bereitstellung elektrischer Energie an den Verbraucher;
eine Messeinrichtung (40) zur Erfassung übertragener elektrischer Energie der Ladevorrichtung (1) und Generierung zumindest eines Messsignals (S) in Abhängigkeit der übertragenen elektrischen Energie; und
eine Recheneinrichtung (50) zur Steuerung und/oder Regelung der Versorgungseinrichtung (30) und der Messeinrichtung (40) mittels jeweils zumindest eines Betriebssignals (S);
wobei die Recheneinrichtung (50) zur Prüfung einer Authentizität der Versorgungseinrichtung (30) und/oder der Messeinrichtung (40) konfiguriert ist, um bei ermittelter mangelnder Authentizität der Versorgungseinrichtung (30) und/oder der Messeinrichtung (40) zumindest ein Authentizitätssignal (S) zu generieren und in Abhängigkeit des zumindest einen Authentizitätssignals (S) zumindest einen Kontrollbetriebszustand der Recheneinrichtung (50) zu aktivieren.

15. Ladevorrichtung (1) nach Anspruch 14,
wobei die Ladevorrichtung (1) eine Anzeigeeinrichtung (60) zur Ausgabe des zumindest einen Messsignals (S) und/oder des zumindest einen Authentizitätssignals (S) umfasst,
wobei die Recheneinrichtung (50) zur Steuerung und/oder Regelung der Anzeigeeinrichtung (60) konfiguriert ist, und
wobei die Recheneinrichtung (50) zur Prüfung einer Authentizität der Anzeigeeinrichtung (60) konfiguriert ist, um bei ermittelter mangelnder Authentizität der Anzeigeeinrichtung (60) zumindest ein Authentizitätssignal (S) zu generieren und in Abhängigkeit des zumindest einen Authentizitätssignals (S) den zumindest einen Kontrollbetriebszustand zu aktivieren.

16. Ladevorrichtung (1) nach Anspruch 14 oder 15,
wobei die Ladevorrichtung (1) eine Benutzeridentifikationseinrichtung (70) zur Autorisierung des Betriebs der Ladevorrichtung (1) durch einen Benutzer umfasst, wobei die Recheneinrichtung (50) zur Steuerung und/oder Regelung der Benutzeridentifikationseinrichtung (70) konfiguriert ist, und
wobei die Recheneinrichtung (50) zur Prüfung einer Authentizität der Benutzeridentifikationseinrichtung (70) konfiguriert ist, um bei ermittelter mangelnder Authentizität der Benutzeridentifikationseinrichtung (70) zumindest ein Authentizitätssignal (S) zu generieren und in Abhängigkeit des zumindest einen Authentizitätssignals (S) den zumindest einen Kontrollbetriebszustand zu aktivieren.

17. Ladevorrichtung (1) nach einem der Ansprüche 14 bis 16,
wobei die Messeinrichtung (40) eine erste Speichereinheit (41) umfasst und die Messeinrichtung (40) zur Speicherung des zumindest einen Messsignals (S) und/oder des zumindest einen Authentizitätssignals (S) in der ersten Speichereinheit (41) konfiguriert ist, wobei vorzugsweise die erste Speichereinheit (41) eine gesicherte Speichereinheit (41) ist.

18. Ladevorrichtung (1) nach einem der Ansprüche 14 bis 17,
wobei die Recheneinrichtung (50) und/oder eine Anzeigeeinrichtung (60) zur Ausgabe des zumindest einen Messsignals (S) und/oder des zumindest einen Authentizitätssignals (S) innerhalb einer vorbestimmten Zeitspanne konfiguriert ist/sind.

19. Ladevorrichtung (1) nach einem der Ansprüche 14 bis 18,
wobei die Recheneinrichtung (50) konfiguriert ist, das zumindest eine Messsignal (S) der Messeinrichtung (40) periodisch und/oder in Abhängigkeit eines Betriebszustands der Versorgungseinrichtung (30) und/oder in Abhängigkeit eines Betriebszustands der Messeinrichtung (40) abzufragen.

20. Ladevorrichtung (1) nach einem der Ansprüche 14 bis 19,
wobei die Messeinrichtung (40) einen eichrechtskonformen und/oder MID-konformen Energiezähler umfasst, oder als ein eichrechtskonformer und/oder MID-konformer Energiezähler ausgebildet ist,
wobei vorzugsweise der Energiezähler nach Klasse B gemäß EN 50470-3 spezifiziert und/oder zertifiziert ausgebildet ist, und/oder
wobei die Messeinrichtung (40) zur Bereitstellung des zumindest einen Messsignals (S) im Open Charge Metering Format (OCMF) konfiguriert ist, welches zumindest eine Messgröße und/oder zumindest eine Identifikationsinformation der Messeinrichtung (40) und/oder zumindest eine Identifikationsinformation der Versorgungseinrichtung (30) umfasst.
